# EUROPEAN PATENT SPECIFICATION

(11) **EP 0 554 888 B1**
(45) Date of publication and mention of the grant of the patent: **22.10.1997**
(21) Application number: 93101820.4
(22) Date of filing: 05.02.1993
(51) Int. Cl.: G01N 25/72, B23K 28/00

(54) **Method for testing spot welds**
Verfahren zum Prüfen von Punktschweissverbindungen
Procédé d'inspection de points de soudure

(30) Priority: 07.02.1992 IT TO920097
(43) Date of publication of application: 11.08.1993
(73) Proprietor: FIAT AUTO S.p.A., 10135 Torino (IT)
(72) Inventor: Tuzzolino, Ninfa, 10100 Torino (IT)
(74) Representative: Jorio, Paolo, Dr. Ing.

(56) References cited:
- EP-A- 0 348 742
- WO-A-87/00632
- FR-A- 2 331 789
- US-A- 3 586 168
- US-A- 4 083 223
- US-A- 4 247 306

## Description

This invention relates to a method for the inspection of a weld between two or more sheets made using a plurality of spot welds.

Welds of this type may be defective when too much heat energy is provided to one or more of the spot welds, such as to alter the structure of the metal, reducing its original mechanical properties, or when too little heat energy is provided, such as to cause incomplete fusion of the material. In both cases the mechanical strength of the spot weld may be unsatisfactory and therefore the weld as a whole may be unacceptable. For this reason welds of this type must be inspected, in particular when the weld is made between structural members which are especially stressed, such as those intended for the construction of motor vehicle frames or coachwork.

Welds of this type are normally inspected manually using very simple tools. In fact, when the strength of a spot weld has to be checked, a chisel whose head is struck with a hammer is inserted into the space between the two sheets close to the said spot weld. Tests of this type are partially destructive, because the sheets are deformed in the vicinity of the spot weld or because the strength of a spot weld which originally had satisfactory characteristics is reduced. Also evaluation of the results of these tests is extremely subjective, and they require much time and skilled personnel. Finally, inspections of this type can only be performed using statistical criteria and are unsuitable for continuous and automatic inspection procedures on production lines.

It is also known from US-A-4 083 223 to inspect spot welds by using infrared thermography.

The object of this invention is to provide a method for the inspection of a weld between two or more sheets made using a plurality of spot welds which does not have the disadvantages which have been described and which in particular is especially suitable for continuous operation on a production line in a wholly automatic way without intervention by operators.

This object is accomplished by a method as claimed in claim 1.

For a better understanding of the method according to this invention and the corresponding stages thereof a more detailed description will now be provided with reference to the appended drawings in which:
Figure 1 shows a cross-section of a joint welded by means of spot welds and obtained by overlapping the two sheets,
Figure 2 shows a diagram illustrating the distribution of temperatures within the sheets and around the spot welds,
Figure 3 shows a pair of diagrams illustrating the change in temperature as a function of time at one of the spot welds between the sheets in Figure 1,
Figure 4 shows a pair of curves giving the temperature of representative spot welds at the limiting conditions for acceptability of the said welds in relation to the temperature of the sheets on which the spot welds have been made,
Figures 5 and 6 show the change in temperature in a welded joint which has been welded by means of three spot welds, and detection means.

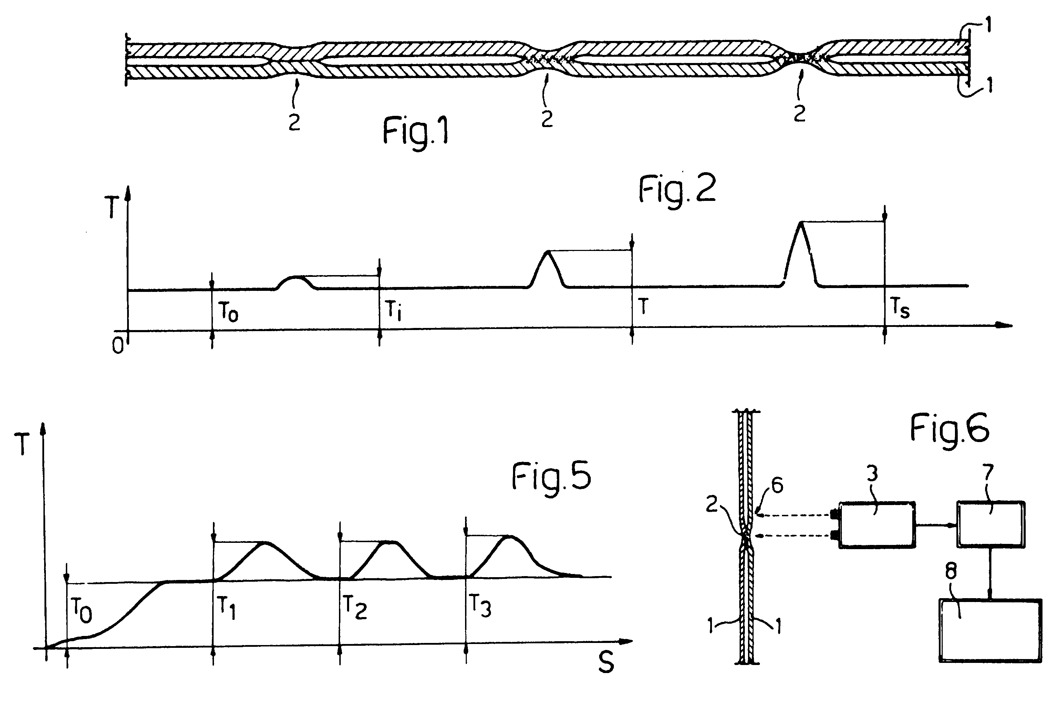

The method for weld inspection according to the invention may be used to make a joint of the type of that illustrated in Figure 1, which is obtained by overlapping two sheets 1 which are connected together by means of a plurality of spot welds 2. Each of these is made e.g. by means of an electric arc welding procedure in which an area of the material of the two sheets 1 is caused to fuse, as is clearly shown in Figure 1.

As is known, in order that the characteristics of each spot weld should be considered satisfactory complete fusion of the material in the two sheets must take place, but the temperature to which the material is brought in the course of the fusion process should not be too high, so as not to alter the properties of the metallurgical structure of the material itself. Also the provision of heat at each spot weld must not be too small if the joint is to be endowed with high mechanical strength so as to prevent detachment of the sheets at that point.

On the basis of the method according to the invention it has been found that the aforesaid mechanical and structural properties of each spot weld 2 can be evaluated by checking whether the temperature of the spot weld lies within a range of predetermined values after the sheets and the spot welds have been suitably heated. It has in fact been found that whenever the two welded sheets are heated to a certain temperature, e.g. by placing them in a furnace at a constant temperature, the distribution of temperatures T along the sheet and in the vicinity of each spot weld is of the type shown in Figure 2. While the temperature of the sheets between the various welding points is substantially constant and equal to a value indicated by T₀, the temperature of the various spot welds varies according to the mechanical and structural properties of the spot welds themselves. When a spot weld has satisfactory properties, its temperature, indicated by T, lies between an upper limit indicated by Tₛ and a lower limit indicated by Tᵢ, which correspond to two spot welds at the limits of acceptability. In fact when the temperature of the point is higher than Tₛ the mechanical properties of the spot weld are no longer satisfactory because excessive heat energy has been applied to that point, which will have either altered the metallurgical structure of the sheet material or will have brought about irregular fusion of the material giving rise to a spot weld of insufficient thickness (Figure 2) and therefore unsatisfactory mechanical strength. When instead the temperature of the spot weld is below limit value Tᵢ the input of heat energy has been insufficient for uniform fusion of the sheet material, and only local fusion of the material at the joined surfaces has been obtained, which gives rise to wholly unsatisfactory mechanical strength in the spot weld.

In accordance with the invention the temperature of each spot weld 2 is evaluated from an area which lies at some distance from the said spot weld. Also it has been found, as will be made clearer below, that the aforesaid upper and lower limits, Tₛ and Tᵢ respectively, of the temperature range in which temperatures corresponding to satisfactory welds lie depends on the temperature to which the sheets have initially been heated.

Conveniently, the method according to the invention may be carried out in a plurality of stages, some of which may follow upon others, while others again may be performed simultaneously. In a first stage, after spot welds 2 have been made, sheets 1 are heated. For this purpose it is sufficient that at least a predetermined part of the sheets which includes spot welds 2 is heated. This area may be limited to comprise a relatively reduced space around a spot weld. Any method of heating that may conveniently be used to effect this heating stage.

When local heating is preferred a flow of air at a certain temperature obtained using a hot air generator is directed towards the aforesaid areas around the various spot welds.

In a second stage of the method an infrared radiation detector is used to detect the temperature T at each spot weld and this detector is able to detect both infrared radiation which is emitted by the spot weld and the infrared radiation which is emitted by the aforesaid area adjacent to the said spot weld.

In a third stage of the method the aforesaid infrared radiation emitted by the spot weld and by the aforesaid area around the spot weld is converted into a first and a second electrical signal which are obviously representative of the temperatures of the spot weld and the aforesaid area of the sheets. The said stages of detecting the infrared radiation and converting such radiation into the aforesaid electrical signals may be performed by means of a thermal imager which is capable of providing a distribution of the temperatures in an area lying around the spot weld on a suitable screen. When two such electrical signals are plotted graphically in relation to the displacement S of the thermal imager a profile of the type shown in Figure 5 is obtained, and this shows the temperatures of the sheets (T₀) and the temperatures (T₁, T₂, T₃) of three spot welds checked in succession using a thermal imager of the type indicated above. In the case provided in Figure 5 by way of example, temperatures T₁, T₂, T₃ of the three spot welds were substantially equal and indicative of entirely satisfactorily spot weld properties.

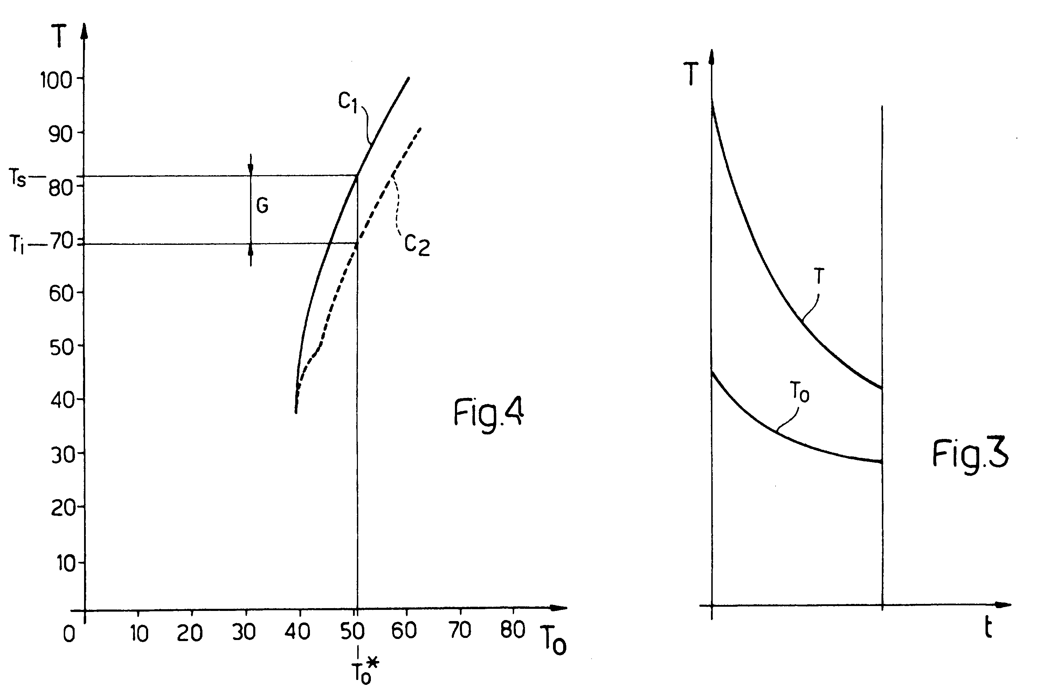

Figure 3 shows the behaviour of the temperature T of a spot weld which is considered satisfactory and the temperature T₀ of a portion of the sheets in the immediate proximity of the said spot weld over the course of time t after the sheets have been heated. As will be seen from these diagrams, the difference T-T₀ decreases slightly in the course of time. It has been found that this difference is maintained in a manner which is still marked even after relatively long measuring times. This fact shows that the time at which the measurement is made, for the purposes of carrying out the stages according to the invention, is not critical, as significant results are obtained in all cases.

In the fourth stage of the method a comparison is made between the values of the electrical signals described above in a manner which will now be described and which will be easier to understand on the basis of the following considerations. If the change in the temperature T of spot welds which lie at the limit conditions for acceptability on account of an excess input of heat are plotted against temperature T₀ of the parts of the sheet which lie close to the said spot welds, the curve c₁ shown in Figure 4 is obtained. Similarly if the behaviour of the temperatures T of spot welds which are considered to be at the limit of acceptability through insufficient provision of heat energy are plotted against temperature T₀ for the portions of the sheets close to the said spot welds, the curve c₂ shown in the same figure is obtained. Curves c₁ and c₂ can easily be obtained from curves of the type of that in Figure 3, which relate to points at the said upper and lower limiting acceptability conditions, i.e. because they are very hot or very cold spot welds. It is therefore obvious that for a predetermined temperature T₀ of the sheets (the value read from the abscissa in Figure 4) there will be a corresponding pair of points on curve c₁ and c₂ which define the upper and lower limits respectively of a range of temperatures within which the temperatures T of spot welds which are considered to be satisfactory may lie. For example, in the case shown in Figure 4, ordinates Tₛ and Tᵢ which define the said temperature range, which is indicated by G, on curves c₁ and c₂ correspond to the temperature T₀* of the sheet. From an examination of the curves in Figure 4 it will be found that the upper limit Tₛ and the lower limit Tᵢ of temperature range G depends on the temperature T₀ of the sheet and the breadth of the range will also depend on that temperature. In particular it will be noted that for very low temperatures T₀, of the order of 40-45°C, curves c₁ and c₂ almost coincide, and therefore it is no longer possible to define temperature range G for these temperatures.

On the basis of the results which have just been described a fourth stage in the method according to the invention can be described, wherein the value of the first electrical signal defined above, which represents temperature T of the spot weld, is compared with the value of the electrical signals lying in a predetermined range. The two upper and lower limit values for this range represent the upper limit acceptability temperature Tₛ for a spot weld and the lower acceptability limit temperature Tᵢ for the same spot weld respectively. In accordance with the method the two aforesaid limits depend on the value of the second electrical signal which represents temperature T₀ of the sheet. Thus in accordance with the method according to the invention the value of the first electrical signal is considered to be representative of a satisfactory spot weld if it lies within the aforesaid range.

A processor controlled by a suitable programme and using equipment of the type shown in Figure 6 can conveniently be used to make the aforesaid comparison between the said electrical signals. This comprises a thermal imager 3, which is aimed at a spot weld 2 on sheet 1, and at the same time at an area 6 which lies around the aforesaid weld. Thermal imager 3 is capable of converting the infrared radiation detected into corresponding electrical signals which are sent to a microprocessor 7, which is programmed in accordance with the strategy described above and is therefore capable of emitting a suitable electrical signal which is sent to an indicator 8 when it is found from comparison of the first electrical signal representing the temperature of the spot weld that it does not fall within the aforesaid range.

It is obvious that the stages in the method described can be performed wholly automatically to provide a continuous method whereby it is possible to inspect a plurality of spot welds in any joint between two or more sheets in succession.

Also the electrical signals generated by thermal imager 3 may be processed in a manner different from that indicated, in order to generate a spot weld unacceptability signal when the temperature found for it is outside the temperature range G lying between the limit values Tₛ and Tᵢ.

It is clear that modifications and variants may be made to the method according to the invention without going beyond the scope thereof.

## Claims

1. A method for the inspection of a weld between two or more sheets made using a plurality of spot welds (2), the method comprising, for each spot weld (2) to be controlled, the steps of:
- heating said sheets (1) to a first predetermined temperature; and
- detecting the infrared radiation emitted by an area (6) of said sheets at some distance from said each spot weld (2) to be controlled;
**characterized** in that
the method further comprises the steps of:
- detecting the infrared radiation emitted by each spot weld (2) to be controlled;
- converting the infrared radiation emitted by each spot weld (2) and the said area (6) ofthe sheets (1) in the vicinity thereof into a first (T) and a second (T₀) electric signals representing, respectively, the temperature of the said spot weld (2) and the temperature of the respective said area (6) in the vicinity thereof;
- using said second electric signal (T₀) to calculate a range of electric signals within an higher value (Ts) and a lower value (Ti); the higher value (Ts) being so calculated such as to be representative of the temperature of a spot weld (2) at the limit of acceptability due to an excess input of heat energy; and the lower value (Ti) being calculated such as to be representative of the temperature of a spot weld (2) at the limit of acceptability due to an insufficient input of heat energy; and
- comparing said first electric value (T) with the value of an electric signal lying within said range of electric signals (Ts;Ti); said spot weld (2) to be controlled being considered a satisfactory spot weld when said first electric value (T) lies within said range (Ts;Ti).

2. A method according to Claim 1, wherein a thermal imager is used to detect the infrared radiation at a certain distance from the sheets (1) and to convert this radiation into electric signals (T,T₀).

3. A method according to Claim 1 or 2, wherein a microprocessor is used to compare the values of the said first electrical signal (T) with the values of the signals (Ts,Ti) lying within a predetermined range during the said comparing step.

4. A method according to anyone of the foregoing Claims, wherein a local heating system is used to heat the said sheets (1) to a certain temperature in the said heating step.

## Patentansprüche

1. Verfahren zum Untersuchen einer Schweißnaht zwischen zwei oder mehr Blechen, die mittels mehrerer Punktschweißstellen (2) hergestellt wird, wobei das Verfahren für jede zu kontrollierende Punktschweißstelle (2) die folgenden Schritte enthält:
- Erwärmen der Bleche (1) auf eine erste vorgegebene Temperatur; und
- Erfassen der von einem Bereich (6) der Bleche ausgesendeten Infrarotstrahlung in einem gewissen Abstand von jeder zu kontrollierenden Punktschweißstelle (2),
**dadurch gekennzeichnet**, daß
das Verfahren ferner die folgenden Schritte enthält:
- Erfassen der von jeder zu kontrollierenden Punktschweißstelle (2) ausgesendeten Infrarotstrahlung;
- Umsetzen der Infrarotstrahlung, die von jeder Punktschweißstelle (2) und von dem Bereich (6) der Bleche (1) in ihrer Umgebung ausgesendet wird, in ein erstes elektrisches Signal (T) und ein zweites elektrisches Signal (T₀), die die Temperatur der Punktschweißstelle (2) bzw. die Temperatur des jeweiligen Bereichs (6) in ihrer Nähe repräsentieren;
- Verwenden des zweiten elektrischen Signals (T₀), um den Bereich der elektrischen Signale innerhalb eines höheren Werts (Ts) und eines niedrigeren Werts (Ti) zu berechnen; wobei der höhere Wert (Ts) in der Weise berechnet wird, daß er die Temperatur einer Punktschweißstelle (2) an der Annehmbarkeitsgrenze aufgrund eines übermäßigen Wärmeenergieeintrags repräsentiert; und wobei der untere Wert (Ti) in der Weise berechnet wird, daß er die Temperatur einer Punktschweißstelle (2) an der Annehmbarkeitsgrenze aufgrund eines unzureichenden Wärmeenergieeintrags repräsentiert; und
- Vergleichen des ersten elektrischen Werts (T) mit dem Wert eines elektrischen Signals, das innerhalb des Bereichs elektrischer Signale (Ts; Ti) liegt, wobei die zu kontrollierende Punktschweißstelle (2) als zufriedenstellende Punktschweißstelle angesehen wird, wenn der erste elektrische Wert (T) innerhalb des Bereichs (Ts; Ti) liegt.

2. Verfahren nach Anspruch 1, in dem ein Thermographiegerät verwendet wird, um die Infrarotstrahlung in einem gewissen Abstand von den Blechen (1) zu erfassen und um diese Strahlung in elektrische Signale (T, T₀) umzusetzen.

3. Verfahren nach Anspruch 1 oder 2, in dem ein Mikroprozessor verwendet wird, um die Werte des ersten elektrischen Signals (T) mit den Werten der Signale (Ts, Ti) zu vergleichen, die während des Vergleichsschrittes innerhalb eines vorgegebenen Bereichs liegen.

4. Verfahren nach irgendeinem der vorangehenden Ansprüche, in dem ein lokales Heizsystem verwendet wird, um die Bleche (1) im Heizschritt auf eine bestimmte Temperatur zu erhitzen.

## Revendications

1. Un procédé pour l'inspection d'une soudure entre deux tôles ou plus réalisée avec une pluralité de points de soudure (2), le procédé comprenant, pour chaque point de soudure (2) à contrôler, les phases de :
- chauffage desdites tôles (1) à une première température prédéterminée ; et
- détection du rayonnement infrarouge émis par une zone (6) desdites tôles à quelque distance de chaque point de soudure (2) à contrôler ;
caractérisé en ce que
le procédé comprend par ailleurs les phases de :
- détection du rayonnement infrarouge émis par chaque point de soudure (2) à contrôler ;
- conversion du rayonnement infrarouge émis par chaque point de soudure (2) et par ladite zone (6) des tôles (1) au voisinage de celui-ci en un premier (T) et un second (T₀) signal électrique représentant respectivement la température dudit point de soudure (2) et la température de ladite zone (6) correspondante située au voisinage de celui-ci ;
- utilisation dudit second signal électrique (T₀) pour calculer une plage de signaux électriques à l'intérieur d'une valeur supérieure (Ts) et d'une valeur inférieure (Ti) ; la valeur supérieure (Ts) étant calculée de telle manière qu'elle soit représentative de la température d'un point de soudure (2) à la limite de l'acceptabilité du fait d'un apport excessif en énergie calorifique ; et la valeur inférieure (Ti) étant calculée de telle manière qu'elle soit représentative de la température d'un point de soudure (2) à la limite de l'acceptabilité du fait d'un apport insuffisant en énergie calorifique ; et
- comparaison de ladite première valeur électrique (T) avec la valeur d'un signal électrique situé à l'intérieur de ladite plage de signaux électriques (Ts ; Ti) ; ledit point de soudure (2) à contrôler étant considéré comme satisfaisant lorsque ladite première valeur électrique (T) est située à l'intérieur de ladite plage (Ts ; Ti).

2. Un procédé selon la revendication 1, dans lequel un imageur thermique est utilisé pour détecter le rayonnement infrarouge à une certaine distance des tôles (1) et pour convertir ce rayonnement en signaux électriques (T, T₀).

3. Un procédé selon la revendication 1 ou 2, dans lequel un microprocesseur est utilisé pour comparer les valeurs dudit premier signal électrique (T) avec les valeurs des signaux (Ts, Ti) situés à l'intérieur d'une plage prédéterminée pendant ladite phase de comparaison.

4. Un procédé selon l'une ou l'autre des revendications précédentes, dans lequel un système de chauffage local est utilisé pour chauffer lesdites tôles (1) à une certaine température dans ladite phase de chauffage.
